# EUROPÄISCHE PATENTSCHRIFT

(11) **EP 2 656 723 B1**
(45) Veröffentlichungstag und Bekanntmachung des Hinweises auf die Patenterteilung: **06.01.2016**
(21) Anmeldenummer: 13159960.7
(22) Anmeldetag: 19.03.2013
(51) Int. Cl.: A01D 41/12

(54) **Erntegutrestehäcksel und -verteilanordnung für einen Mähdrescher mit in eine Schwadablageposition verbringbaren Führungselementen**
Harvested goods remnant shredder and distribution assembly for an agricultural harvester with guiding elements that can be brought into a swath discharge position
Agencement de hachage et de répartition de résidus de produits de récolte pour une moissonneuse-batteuse doté d'éléments de guidage pouvant être amenés dans une position d'andainage

(30) Priorität: 24.04.2012 DE 102012206688
(43) Veröffentlichungstag der Anmeldung: 30.10.2013
(73) Patentinhaber: DEERE & COMPANY, Moline, Illinois 61265-8098 (US)
(72) Erfinder: Weichholdt, Dirk, 57200 Woelfling les Sarreguemin (FR); Poelling, Benedikt, 66482 Zweibrücken (DE)
(74) Vertreter: Holst, Sönke

(56) Entgegenhaltungen:
- EP-A1- 0 993 764
- EP-A1- 2 250 869
- EP-A2- 2 036 422
- DE-A1- 4 313 841

## Beschreibung

Die Erfindung betrifft eine Erntegutrestehäcksel- und -verteilanordnung für einen Mähdrescher gemäß dem Oberbegriff des Anspruchs 1.

### Stand der Technik

Landwirtschaftliche Mähdrescher sind große Maschinen, die landwirtschaftlich angebautes Erntegut, das Korn trägt, ernten, dreschen, trennen und reinigen. Das erhaltene saubere Korn wird in einem am Mähdrescher angeordneten Korntank gespeichert. Das ausgedroschene Stroh wird, wie beispielsweise in der als gattungsbildend angesehenen EP 2 250 870 A1 beschrieben, bei aktuellen Mähdreschern zumindest der oberen Leistungsklassen entweder in einem Häckselmodus gehäckselt und durch den Strohhäcksler nachgeordnete Wurfgebläse über die Schneidwerksbreite auf dem Feld verteilt oder in einem Schwadablagemodus um den Strohhäcksler herum geleitet und in nicht gehäckselter Form in einem Schwad auf dem Feld abgelegt, um es später mit einer Ballenpresse aufnehmen zu können. Die am rückwärtigen Auslass der Reinigungseinrichtung verbleibenden Erntegutreste, wie Kaff und kleine Strohteile, werden in beiden Modi ebenfalls durch den Strohhäcksler geleitet und durch die Wurfgebläse auf dem Feld verteilt.

Der Mähdrescher nach EP 2 250 870 A1 weist in einer Ausführungsform hinter und zwischen den Wurfgebläsen angeordnete, bewegliche Führungselemente auf, die dazu dienen, das im mittigen Bereich des Strohhäckslers abgegebene Erntegut, das direkt durch einen Freiraum zwischen die Wurfgebläse teilweise umschließenden Teilummantelungen hindurchtritt, und auch einen Teil des von den Wurfgebläsen nach hinten abgegebenen Ernteguts in seitlicher Richtung mehr oder weniger weit seitlich abzulenken und somit gleichmäßig auf dem Feld zu verteilen, wozu die nach außen gekrümmten Führungselemente durch einen Antrieb in eine kontinuierliche Schwingbewegung versetzt werden. Dazu sind die an ihren vorderen Enden um die Hochachse schwenkbar angelenkten Führungselemente in ihrem rückwärtigen Bereich durch eine Koppelstange untereinander verbunden und eine Kurbelstange verbindet einen mit einem der Führungselemente verbundenen Zapfen mit einem durch den Antrieb in Drehung versetzbaren Antriebsrad, an welchem die Kurbelstange exzentrisch gegenüber dem Drehpunkt des Antriebsrades angelenkt ist. Die beiden Führungselemente schwingen somit gleichsinnig und kontinuierlich.

Die EP 1 219 164 A1 beschreibt einen Mähdrescher, bei dem das Stroh ebenfalls entweder gehäckselt und durch den Strohhäcksler nachgeordnete Strohleitkufen über die Schneidwerksbreite auf dem Feld verteilt oder um den Strohhäcksler herum geleitet und in nicht gehäckselter Form in einem Schwad auf dem Feld abgelegt wird, um es später mit eine Ballenpresse aufnehmen zu können. Die am rückwärtigen Auslass der Reinigungseinrichtung verbleibenden Erntegutreste, wie Kaff und kleine Strohteile, werden ebenfalls durch den Strohhäcksler geleitet und durch die Strohleitkufen seitlich abgelenkt und auf dem Feld verteilt. Im Schwadablagemodus werden die Strohleitkufen in eine Position verstellt, in der sie das Kaff seitlich neben dem Schwad ablegen.

In der DE 101 33 965 A1 wird ein anderer Mähdrescher mit einem Strohhäcksler und diesem nachgeordneten Wurfgebläsen beschrieben, denen durch einen Antrieb zyklisch positionsverstellbare Teilummantelungen zugeordnet sind, um die ausgestoßenen Erntegutreste kontinuierlich mehr oder weniger weit nach außen abzulenken und auf diese Weise gleichmäßig über das Feld zu verteilen. Auch hier werden die Teilummantelungen durch einen Exzenterantrieb in eine Schwingbewegung versetzt. Bei einer Ausführungsform ist eine veränderbare Übersetzung zwischen dem Exzenterantrieb und den Teilummantelungen vorgesehen, wozu der Angriffspunkt einer ersten, mit dem Exzenterantrieb antriebsverbundenen Koppelstange an einem Schwenkarm durch einen fremdkraftbetätigten Antrieb verstellbar ist. Eine zweite, mit den Teilummantelungen gekoppelte Koppelstange ist unverstellbar am Schwenkarm angelenkt. Dadurch kann die Übersetzung zwischen einem Minimalwert, bei dem die Teilummantelungen sich nur geringfügig aus einer das Erntegut nur wenig seitlich ablenkenden Ruhestellung bewegen und einem Maximalwert, bei dem sich die Teilummantelungen weiter aus der Ruhestellung gelangen, verändert werden.

### Aufgabe der Erfindung

Bei der EP 2 250 870 A1 ist als nachteilig anzusehen, dass beim Schwadablagebetrieb ein gewisser Teil des Kaffs unter dem oder im Strohschwad abgelegt wird, da die Führungselemente aufgrund der vorgesehenen Antriebsanordnung nicht in eine Stellung verbracht werden können, in der sie es auf beiden Seiten gleichzeitig hinreichend weit nach außen ablenken. Durch das Kaff trocknet das Strohschwad jedoch nicht immer in einem hinreichenden Maß, sodass man bei der Aufnahme des Strohschwads mit einer Ballenpresse relativ feuchte Strohballen erhält, die getrocknet werden müssen oder zum Schimmeln neigen. Dieses Problem stellt sich bei der Anordnung nach EP 1 219 164 A1 zwar nicht; allerdings sind dort auch keine Wurfgebläse und keine sich zyklisch bewegenden Stohleitkufen vorgesehen und die Arbeitsbreite der Verteilanordnung ist geringer als bei der EP 2 250 870 A1.

Die der Erfindung zu Grunde liegende Aufgabe wird somit darin gesehen, eine Erntegutrestehäcksel- und -verteilanordnung mit einem Strohhäcksler für einen Mähdrescher bereitzustellen, denen durch einen Antrieb kontinuierlich verstellbare Führungselemente zugeordnet sind, die in einem Schwadablagemodus ohne großen Aufwand in eine Stellung verbringbar sind, in welcher sie das durch die Erntegutrestehäcksel- und -verteilanordnung geförderte Kaff seitlich neben dem Schwad ablegen.

### Lösung

Diese Aufgabe wird erfindungsgemäß durch die Lehre des Patentanspruches 1 gelöst, wobei in den weiteren Patentansprüchen Merkmale aufgeführt sind, die die Lösung in vorteilhafter Weise weiterentwickeln.

Eine Erntegutrestehäcksel- und -verteilanordnung für einen Mähdrescher umfasst einen Strohhäcksler. Im Erntebetrieb zerkleinert der Strohhäcksler ihm zugeführte Erntegutreste und führt sie (wenigstens) zwei Führungselementen zu. Die Erntegutrestehäcksel- und -verteilanordnung ist in einem Häckselmodus betreibbar, in welchem das Stroh durch den Strohhäcksler bearbeitet und über das Feld verteilt wird. Außerdem ist die Erntegutrestehäcksel- und -verteilanordnung in einem Schwadablagemodus betreibbar, in dem das Stroh am Strohhäcksler vorbeigeführt wird und die Erntegutrestehäcksel- und -verteilanordnung nur das Kaff fördert und verteilt, wobei das Kaff den Führungselementen über den Strohhäcksler oder unter Umgehung des Strohhäckslers von dem Reinigungssystem zugeführt werden kann.

Die kufenartigen Führungselemente zum seitlichen Ablenken und gleichmäßigen Verteilen der Erntegutreste sind durch einen (rotierenden oder sich hin und her bewegenden) Antrieb in eine kontinuierliche Schwingbewegung versetzbar. Zwischen dem Antrieb und den Führungselementen ist ein Getriebe mit einem verstellbaren Übersetzungsverhältnis angeordnet, welches die Führungselemente bei einem minimalen Übersetzungsverhältnis in eine die Erntegutreste weitestmöglich nach außen leitende Stellung verbringt. Das Getriebe ermöglicht somit, durch Verändern des Übersetzungsverhältnisses die Amplitude der Bewegung der Führungselemente zu verstellen. Bei minimalem Übersetzungsverhältnis ist die Amplitude am kleinsten und vorzugsweise gleich null. Dann befinden sich die Führungselemente in ihrer im größten möglichen Maß nach außen und vorn gerichteten Stellung, in der sie die Erntegutreste nicht in der Nähe der Längsmittelebene des Mähdreschers ablegen, sondern demgegenüber weiter nach außen versetzt.

Auf diese Weise kann die Amplitude der Bewegung der Führungselemente stufenlos oder in Stufen verstellt und auf einen der jeweiligen Erntesituation optimal angepassten Wert gebracht werden. Außerdem wird die Möglichkeit geschaffen, die Führungselemente anzuhalten und in eine Stellung zu verbringen, in welcher sie das Kaff seitlich neben dem Schwad ablegen, was insbesondere im Schwadablagemodus von Vorteil ist.

Vorzugsweise umfasst die Erntegutrestehäcksel- und -verteilanordnung zusätzlich zwei bezüglich der Gutflussrichtung stromab des Strohhäckslers angeordnete Wurfgebläse. Die zu verteilenden, vom Strohhäcksler heran geförderten Erntegutreste werden durch die zwei Wurfgebläse angenommen und über das Feld verteilt. Dazu rotieren die Wurfgebläse gegensinnig, wobei die dem Strohhäcksler zugewandten Bereiche der Wurfgebläse aufeinander zu drehen. Das in Vorwärtsrichtung linke Wurfgebläse rotiert, wenn man es von oben betrachtet, demnach im Uhrzeigersinn, während das in Vorwärtsrichtung rechte Wurfgebläse, von oben her betrachtet, im Gegenuhrzeigersinn rotiert. Rückwärtig der Wurfgebläse und zwischen ihnen sind die Führungselemente jeweils dem Umfang eines der Wurfgebläse benachbart angebracht. Die Führungselemente können die Abrisskante der Wurfgebläse definieren (s. DE 101 33 965 A1) oder die direkt vom Strohhäcksler abgegebenen, zwischen den Wurfgebläsen durch einen Zwischenraum zwischen den Wurfgebläsen gelangenden Erntegutreste und/oder einen Teil der in der Nähe der Längsmittelebene der Erntegutrestehäcksel- und -verteilanordnung von den Wurfgebläsen nach hinten abgegebene Erntegutreste zyklisch mehr oder weniger weit seitlich ablenken (s. Figur 8 der EP 2 250 870 A1). Bei einer anderen Ausführungsform ohne Wurfgebläse streuen die Führungselemente die vom Strohhäcksler abgegebenen Erntegutreste direkt, ohne dazwischen angeordnete Wurfgebläse, seitlich über das Feld (vgl. DE 100 29 715 A1), wobei in der Regel mehr als zwei Führungselemente seitlich nebeneinander angeordnet werden.

Die Führungselemente sind vorzugsweise gegensinnig antreibbar. Sie können an ihren vorderen Enden um zumindest näherungsweise vertikal orientierte Drehachsen schwenkbar gelagert sein, obwohl auch eine schwenkbare Lagerung im rückwärtigen Bereich denkbar wäre.

Der Antrieb der Führungselemente kann durch gegabelte Schwenkarme erfolgen, deren Gabeln einen Stift umgreifen, der an einem verschiebbaren Koppelarm angebracht ist. Es sind aber auch beliebige andere Anordnungen denkbar, wie beispielsweise eine direkte Anlenkung des Koppelarms an einem Führungselement und eine gegensinnige Kraftübertragung von diesem Führungselement bzw. dem Koppelarm auf das andere Führungselement, oder ein gegensinniger Antrieb der Führungselemente durch zwei bewegte Koppelarme, die jeweils ein Führungselement gegenphasig zum anderen Führungselement bewegen.

Das Getriebe umfasst in einer möglichen Ausführungsform der Erfindung ein um eine Schwenkachse schwenkbar gelagertes Hebelelement, das mittels einer mit dem Antrieb gekoppelten Kurbelstange in eine Schwingbewegung versetzbar ist. Ein die Führungselemente mit dem Getriebe verbindender Koppelarm ist gegenüber dem Hebelelement schwenkbar gelagert. Die Position des Schwenkpunkts des Koppelarms am Hebelelement ist durch einen fremdkraftbetätigten Verstellantrieb entlang des Hebelelements verstellbar. Man erhält somit ein Hebelgetriebe mit verstellbarem Übersetzungsverhältnis. Wenn der Koppelarm durch den Verstellantrieb bis in eine zur Schwenkachse des Hebelelements koaxiale Position verbringbar ist, kann das Übersetzungsverhältnis auf null gebracht werden und die Führungselemente kommen dann zum Stehen, obwohl sich der Antrieb noch weiter bewegt und dann ggf. abgeschaltet werden kann. Ist die Schwenkachse des Hebelelements näher an den Führungselementen positioniert als die übrigen Stellungen des Koppelarms am Hebelelement, erreicht man, dass die Führungselemente bei der koaxialen Position des Koppelelements zur Schwenkachse des Hebelelements in ihre weitestmöglich nach vorn verlagerte Position gelangen, in der sie das Erntegut am weitesten nach außen ablenken.

Eine von einem Bediener mittels einer Eingabeeinrichtung kontrollierbare elektronische Steuerung kann Aktoren ansteuern, welche geeignete Verstellelemente bewegen, um die Erntegutrestehäcksel- und -verteilanordnung zwischen dem Häckselmodus und dem Schwadablagemodus umzuschalten. Die Steuerung kann auch einen Aktor ansteuern, der im Schwadablagemodus selbsttätig das Getriebe in die Stellung minimaler Übersetzung verbringt.

### Ausführungsbeispiel

Anhand der Abbildungen wird ein Ausführungsbeispiel der Erfindung erläutert. Es zeigt:
- Fig. 1: eine teilgeschnittene seitliche Ansicht eines Mähdreschers mit einem Strohhäcksler und Wurfgebläsen,
- Fig. 2: eine vergrößerte seitliche Ansicht des Strohhäckslers und eines Wurfgebläses,
- Fig. 3: eine Draufsicht auf den Strohhäcksler und die Wurfgebläse mit stromab angeordneten Führungselementen,
- Fig. 4: eine vergrößerte Draufsicht auf den Antrieb der Führungselemente und
- Fig. 5: einen vertikalen Schnitt durch das Getriebe zum Antrieb der Führungselemente.

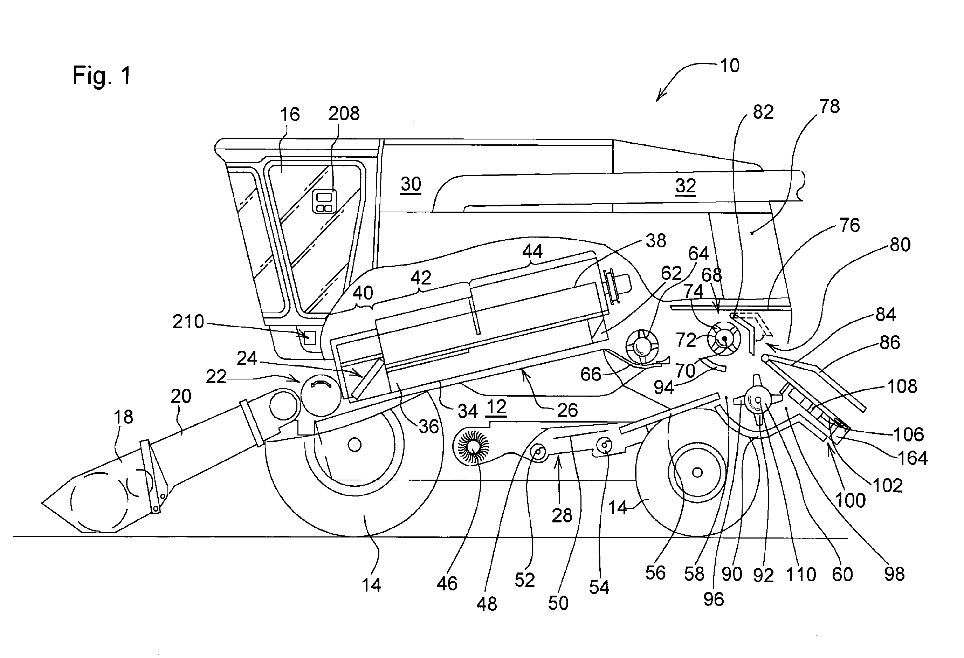

Die Figur 1 zeigt einen landwirtschaftlichen Mähdrescher 10 mit einem Fahrgestell 12 mit im Eingriff mit dem Boden befindlichen Rädern 14, die am Fahrgestell 12 befestigt sind und zum Vortrieb des Mähdreschers 10 dienen. Der Betrieb des Mähdreschers 10 wird von der Bedienerkabine 16 aus kontrolliert. Ein Schneidwerk 18 wird verwendet, um Korn enthaltendes Erntegut zu ernten und es einem Schrägförderer 20 zuzuführen. Das geerntete Gut wird durch den Schrägförderer 20 einer Leittrommel 22 zugeführt. Die Leittrommel 22 leitet das Erntegut durch einen Einlassübergangsabschnitt 24 zu einer axialen Erntegutbearbeitungseinrichtung 26. Im Folgenden beziehen sich Richtungsangaben, wie vorn und hinten, auf die Vorwärtsrichtung des Mähdreschers 10, die in der Figur 1 nach links verläuft.

Die Erntegutbearbeitungseinrichtung 26 umfasst ein Rotorgehäuse 34 und einen darin angeordneten Rotor 36. Der Rotor 36 umfasst eine hohle Trommel 38, an der Gutbearbeitungselemente in einem Beschickungsabschnitt 40, einen Dreschabschnitt 42 und einen Trennabschnitt 44 befestigt sind. Der Beschickungsabschnitt 40 ist an der Vorderseite der axialen Erntegutbearbeitungseinrichtung 26 angeordnet. In Längsrichtung stromab und rückwärtig des Beschickungsabschnitts 40 liegen der Dreschabschnitt 42 und der Trennabschnitt 44. Die Trommel 38 ist im Beschickungsabschnitt 40 kegelstumpfförmig. Der Dreschabschnitt 42 umfasst einen kegelstumpfförmigen vorderen Abschnitt und einen zylindrischen rückwärtigen Abschnitt. Am Ende der axialen Erntegutbearbeitungseinheit 26 befindet sich der zylindrische Trennabschnitt 44 der Trommel 38. Anstelle einer axialen Erntegutbearbeitungseinheit 26 können auch eine tangentiale Dreschtrommel und wenigstens eine ihr folgende axiale Trenneinrichtung oder ihr folgende Strohschüttler verwendet werden.

Korn und Spreu, die durch einen dem Dreschabschnitt 42 zugeordneten Dreschkorb und ein dem Trennabschnitt 44 zugeordneten Trennrost fallen, werden einem Reinigungssystem 28 mit einem Gebläse 46 und in eine Schwingbewegung versetzbaren Lamellensieben 48, 50 zugeführt. Das Reinigungssystem 28 entfernt die Spreu und führt das saubere Korn über einen Schneckenförderer 52 einem Elevator für sauberes Korn (nicht gezeigt) zu. Der Elevator für sauberes Korn legt das saubere Korn in einem Korntank 30 ab. Das saubere Korn im Korntank 30 kann durch einen Entladeschneckenförderer 32 auf einen Kornwagen, Anhänger oder Lastwagen entladen werden. Am rückwärtigen Ende des unteren Lamellensiebs 50 verbleibendes Erntegut wird mittels eines Schneckenförderers 54 und eines Überkehrförderers (nicht gezeigt) wieder der Erntegutbearbeitungseinrichtung 26 oder einem separaten Nachdrescher zugeführt, der es dann wieder dem Reinigungssystem 28 zuführt. Die am rückwärtigen Ende des oberen Lamellensiebs 48 abgegebenen Erntegutreste, die im Wesentlichen aus Kaff (Spreu) und kleinen Strohteilchen bestehen, werden durch einen Schwingbodenförderer 56 nach hinten in einen Einlass 58 eines Strohhäckslers 60 gefördert.

Gedroschenes, den Trennabschnitt 44 verlassendes Stroh wird durch einen Auslass 62 aus der Erntegutbearbeitungseinrichtung 26 ausgestoßen und einer Auswurftrommel 64 zugeführt. Die mit einem darunter angeordneten Boden 66 zusammenwirkende Auswurftrommel 64 wirft das Stroh nach hinten aus. Rückwärtig der Auswurftrommel 64 und etwa in vertikaler Höhe ihrer Drehachse befindet sich ein weiterer Förderer in Form eines oberschlächtig arbeitenden Trommelförderers 68. Der Trommelförderer 68 erstreckt sich horizontal und quer zur Vorwärtsrichtung und ist durch einen geeigneten Antrieb um seine Achse 70, an der er drehbar am Fahrgestell 12 befestigt ist, in eine Drehrichtung in Drehung versetzbar, in der er oberschlächtig arbeitet und in der Figur 1 im Uhrzeigersinn dreht, wie durch den Pfeil angedeutet. Zum Antrieb des Trommelförderers 68 wird in der Regel ein Hydraulikmotor verwendet. Der Trommelförderer 68 entspricht in seinem Aufbau der Auswurftrommel 64 und umfasst einen rotationssymmetrischen Mantel 72 mit um seinen Umfang verteilten, starr daran angebrachten Mitnehmern 74. Unterhalb des Trommelförderers 68 ist eine Wanne 94 angeordnet.

Oberhalb der Auswurftrommel 64 und des Trommelförderers 68 ist eine sich horizontal und in Vorwärtsrichtung erstreckende obere Wand 76 angebracht, die einen darüber befindlichen Motorraum 78 nach unten abschließt. An der Wand 76 ist eine Klappe 80 an ihrem vorderen, dem Trommelförderer 68 benachbarten Ende um eine sich horizontal und quer zur Vorwärtsrichtung erstreckende Achse 82 zwischen einer Schwadablageposition und einer Häckselposition verschwenkbar angelenkt. Die Klappe 80 ist nach unten abgewinkelt, wie in der Figur 1 gezeigt, oder in sich konkav gekrümmt, wobei der Radius an den Trommelförderer 68 angepasst ist.

Unterhalb des unteren und rückwärtigen Endes der Klappe 80 schließt sich (bei in der Häckselstellung befindlicher Klappe 80) lückenlos ein mit dem Fahrgestell 12 fest verbundenes Blech 84 an, das sich schräg nach hinten und unten erstreckt und mit einer sich daran anschließenden Rutsche 86 verbunden ist, auf der das Stroh im Schwadablagebetrieb nach unten auf den Feldboden gleiten kann. Das Strohschwad kann noch durch an der Oberseite der Rutsche 86 angebrachte Leitkufen oder Strohleitrechen (nicht gezeigt) in eine gewünschte Form gebracht werden.

Die Klappe 80 ist um die Achse 82 zwischen der Häckselposition, in der sie in der Figur 1 mit durchgezogenen Linien dargestellt ist, und einer Schwadablageposition verschwenkbar, in der die Klappe 80 in der Figur mit gestrichelten Linien dargestellt ist und sie sich oberhalb des Strohflusses nach hinten erstreckt.

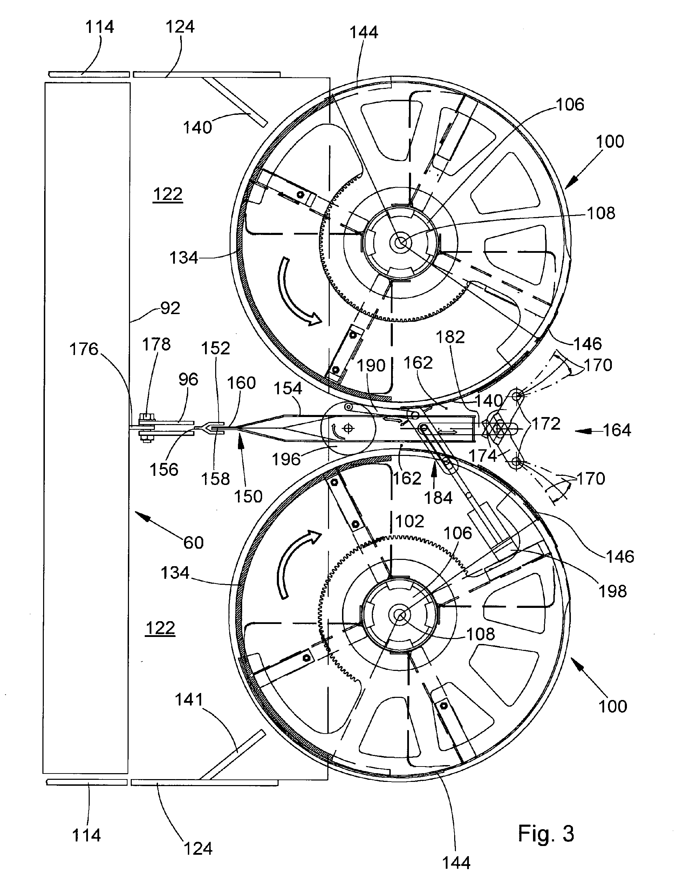

Unterhalb des Blechs 84 befindet sich der Strohhäcksler 60, der sich aus einem Strohhäckslergehäuse 90 und einem darin angeordneten, um eine quer zur Vorwärtsrichtung und horizontal verlaufende Achse drehbaren Rotor 92 mit um den Umfang des Rotors 92 verteilten, an mit dem Rotor 92 verschweißten Konsolen 176 durch Schraubbolzen 178 (s. Figur 3) pendelnd aufgehängten Häckselmessern 96 zusammensetzt. Am Rotor 92 können auch zusätzliche Wurfpaddelpaddel (nicht gezeigt) befestigt werden, oder einige oder alle Häckselmesser 96 umfassen Paddel zur Luftförderung. Stromab eines Auslasses 98 des Strohhäckslers 60 ist sind zwei seitlich nebeneinander unterhalb der Rutsche 86 angeordnete Wurfgebläse 100 vorgesehen, von denen in der Figur 1 nur ein einziges erkennbar ist. Die Wurfgebläse 100 umfassen eine Anzahl an Wurfpaddeln 102, die jeweils durch jeweils einen Hydraulikmotor 106 um ihre (sich etwa vertikal erstreckenden, jedoch leicht nach hinten und oben geneigten) Drehachsen 108 in Drehung versetzbar sind, und denen der Strohhäcksler 60 die Erntegutreste in axialer Richtung unter einem stumpfen Winkel gegenüber den Drehachsen der Wurfgebläse 100 von unten her zuführt.

Die Drehachse 110 des Rotors 92 des Strohhäckslers 60 erstreckt sich horizontal und quer zur Vorwärtsrichtung. Die Wurfgebläse 100 sind seitlich nebeneinander rückwärtig des Strohhäckslers 60 angeordnet. Die Wurfgebläse 100 befinden sich innerhalb der Breite des Strohhäckslers 60. Die Wurfgebläse 100 sind durch Halterungen (nicht gezeigt) am dem Rahmen 12 des Mähdreschers 10 und/oder an der Rutsche 86 befestigt. Es wäre auch möglich, den Strohhäcksler 60 und die Wurfgebläse 100 derart anzuordnen, dass der Strohhäcksler 60 die Wurfgebläse 100 von oben her beaufschlagt. Bei einer anderen Ausführungsform sind die Drehachsen 108 der Wurfgebläse 100 horizontal oder genau vertikal.

In der Schwadablageposition der Klappe 80 fördert der Strohhäcksler 60 nur die Erntegutreste aus dem Reinigungssystem 28 zu den Wurfgebläsen 100, welche sie etwa über die Breite des Schneidwerks 18 auf dem Feldboden verteilen. Im Häckselbetrieb zerkleinert der Strohhäcksler 60 auch das Stroh auf dem Auslass 62 der Erntegutbearbeitungseinrichtung 26, das durch die Auswurftrommel 64 und den Trommelförderer 68 gegen die Klappe 80 geworfen wird und dann nach unten in den Einlass 58 des Strohhäckslers 60 fällt.

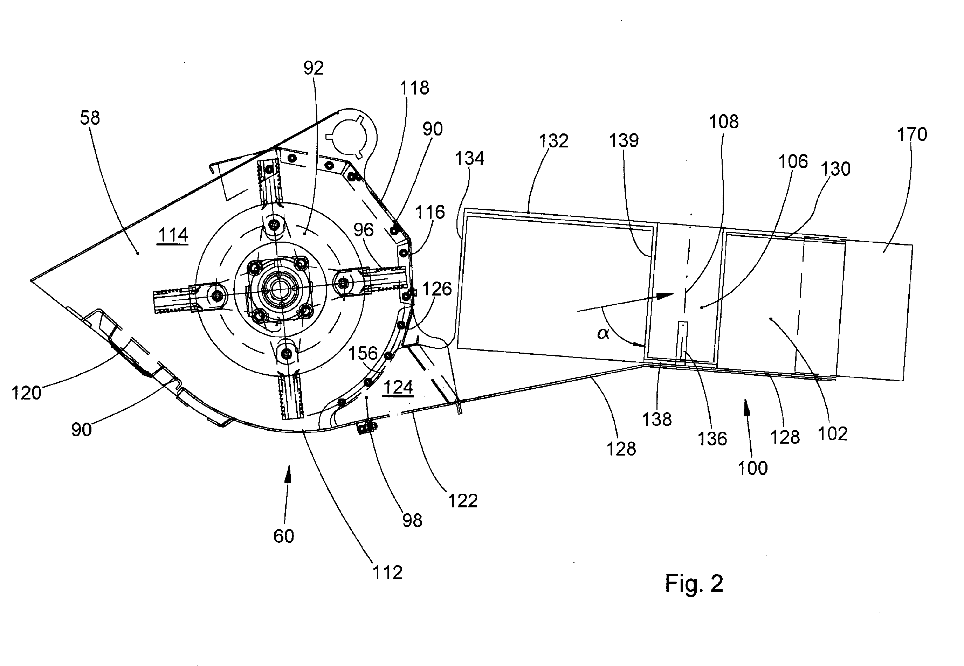

Es wird nun auf die Figuren 2 und 3 verwiesen, in welcher die Erntegutrestehäcksel- und -verteilanordnung des Mähdreschers 10 in einer Seitenansicht (Figur 2) und einer Draufsicht (Figur 3) dargestellt ist. Die Erntegutrestehäcksel- und -verteilanordnung umfasst den Strohhäcksler 60 und die Wurfgebläse 100. Das Strohhäckslergehäuse 90 umfasst einen Boden 112, zwei Seitenwände 114 und weitere Querbleche 116, 118, 120, die wie der Boden 112 die Seitenwände 114 untereinander verbinden und den Rotor 92 umschließen. Der Boden 112 ist an der Unterseite des Strohhäckslergehäuses 90 angeordnet und umschließt den von den Häckselmessern 96 definierten Hüllkreis kreisbogenförmig in einem relativ geringen Abstand mit einem Radius. Es können auch Gegenmesser (nicht dargestellt) vorgesehen sein, die am Strohhäckslergehäuse 90 befestigt werden und in den Hüllkreis der Häckselmesser 96 eindringen, um die Erntegutreste effektiv zu zerkleinern.

An den Boden 112 schließt sich in der Flussrichtung der Erntegutreste ein Erntegutresteführungselement 122 an. Das Erntegutresteführungselement 122 ist zwischen Seitenwandverlängerungen 124 angeordnet, die mit je einer Seitenwand 114 des Strohhäckslergehäuses 90 durch Schraubverbindungen verbunden sind und sich dazu parallel erstrecken. Das Erntegutresteführungselement 122 ist in sich eben (hat demnach einen Radius von ∞). Das Erntegutresteführungselement 122 ist an seinem vorderen Ende nach unten abgewinkelt, um einen Flansch zu bilden, der mit einem ebenfalls nach unten abgewinkelten Flansch an der Rückseite des Bodens 112 verschraubt ist. Durch diese Verbindung vermeidet man überstehende Kanten, an denen sich Erntegutreste ansammeln könnten. An der Oberseite der Seitenwandverlängerungen 124 ist ein Querblech 126 angebracht, das den Auslass 98 des Strohhäckslers 60 nach oben hin begrenzt. Nach oben hin schließt sich an das Querblech 126 ein Querblech 116 des Strohhäckslergehäuses 90 an. An den Seitenwandverlängerungen 124 sind äußere Leitelemente 141 (s. Figur 3) befestigt, die sich unter einem Winkel von etwa 45° nach innen und hinten erstrecken.

An der Unterseite der Wurfgebläse 100 ist ein abgewinkeltes Bodenblech 128 angeordnet, das sich von einer Position kurz vor den Drehachsen bis an das rückwärtige Ende der Wurfgebläse 100 erstreckt. Das Bodenblech 128 weist einen vorderen Abschnitt auf, der sich in der Ebene des Erntegutresteführungselements 122 erstreckt und mit einem nach unten abgewinkelten Flansch an einem nach unten abgewinkelten Flansch des Erntegutresteführungselements 122 anliegt. Diese Flansche können miteinander verschraubt werden oder nur aneinander anliegen, um die Wurfgebläse 100 leichter getrennt vom Strohhäcksler 60 in eine Transportposition verbringen zu können. Der vordere Abschnitt des Bodenblechs 128 erstreckt sich vom besagten Flansch bis kurz vor die Drehachse 108 der Wurfgebläse 100 und geht dort in einen rückwärtigen Abschnitt über, der sich bis unter das rückwärtige Ende der Wurfgebläse 100 und orthogonal zur Drehachse 108 erstreckt.

Die unten liegenden Ausgangswellen 136 der am Deckel 132 befestigten Hydromotoren 106 treiben die Wurfpaddel 102 über eine Querverbindung 138 und eine zylindrische Welle 139 an, die an ihrem oberen Ende an einem Teller 130 mit einer mittleren Öffnung befestigt ist. Die Wurfpaddel 102 der Wurfgebläse 100 erstrecken sich jeweils genau über die axiale Abmessung der Welle 139. Die Wurfpaddel 102 liegen mit ihren Oberseiten am Teller 130 an oder sind daran befestigt (z. B. angeschweißt).

Oberhalb des Tellers 130 befindet sich ein Deckel 132, der die Wurfgebläse 100 nach oben hin abdeckt, und an dessen Vorderseite zwei jeweils ein Wurfgebläse 100 halbkreisförmig nach vorn radial umschließende Teilummantelungen 134 angeordnet sind. Weitere Teilummantelungen 140 schließen sich an den benachbarten Innenseiten der Wurfgebläse 100 an, wobei zwischen den Teilummantelungen 134 und den Teilummantelungen 140 noch Lücken 142 verbleiben.

Zwischen den beiden Wurfgebläsen 100 befindet sich ein zweiteiliges Leitelement 150, das einen vorderen Teil 152 und einen rückwärtigen Teil 154 umfasst. Der vordere Teil 152 ist am Erntegutresteführungselement 122 befestigt und mit seiner vorderen Spitze 156 an den Hüllkreis der Häckselmesser 96 angepasst, so dass er über seine dem Hüllkreis der Häckselmesser 96 benachbarte Spitze 156 kreisbogenförmig ausgeformt ist und diese Spitze 165 in einem relativ geringen Abstand vom Hüllkreis der Häckselmesser 96 angeordnet ist. An seiner Rückseite bildet der vordere Teil 152 einen Schlitz, in den ein flaches, vorderes Blech 158 des rückwärtigen Teils 154 eindringt. Rückwärtig des vorderen Blechs 158 verbreitert sich der rückwärtige Teil 154 und ist in sich hohl. Der rückwärtige Teil 154 ist an der Unterseite des Deckels 132 und an der Oberseite des Bodenblechs 128 befestigt, welche mit den Teilummantelungen 134, 140 und zusätzlichen Abschirmungen 144, 146 ein Wurfgebläsegehäuse bilden.

Anhand der Figur 3 ist erkennbar, dass zwischen dem Leitelement 150 und den ihm benachbarten Teilummantelungen 134, 140 der Wurfgebläse 80 jeweils Durchlässe 162 vorhanden sind, durch die ein im mittleren Bereich des Strohhäckslers 60 abgegebener Teil des Erntegutrestestroms vom Strohhäcksler 60 direkt (ohne mit den Wurfgebläsen 100 zusammenzuwirken) nach hinten hindurch bis auf das Feld strömen kann.

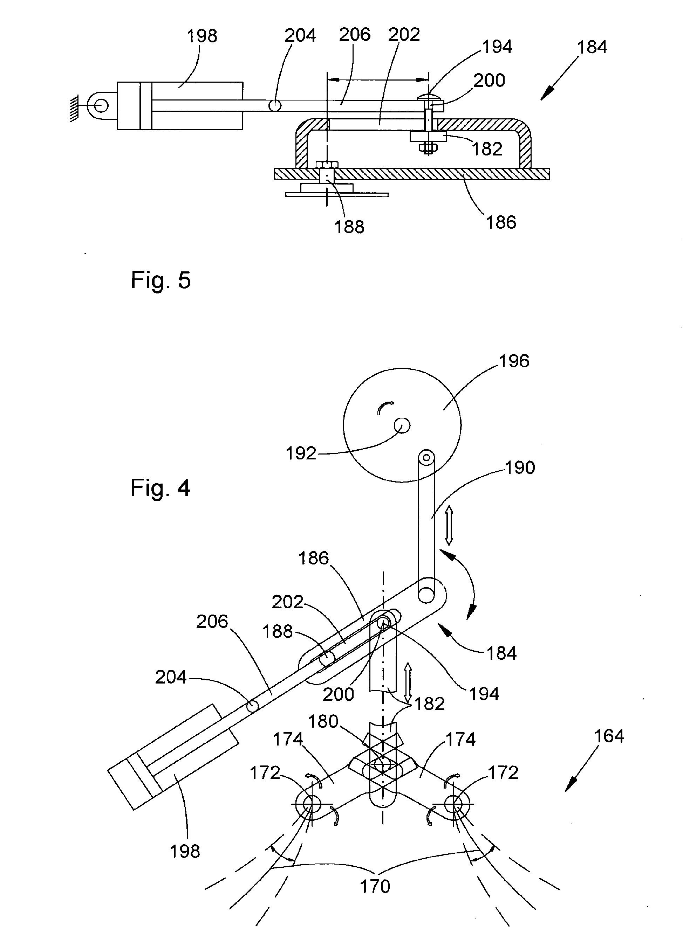

Die Teilummantelungen 140 sind, wie in den Figuren 5 bis 7 der EP 2 250 870 A1 gezeigt ist, deren Offenbarung durch Verweis mit in die vorliegenden Unterlagen aufgenommen wird, mit einem höheren, rückwärtigen Abschnitt und einem niedrigeren, vorderen Abschnitt ausgestattet, zwischen denen ein schräg ansteigender Bereich vorgesehen ist. Die Teilummantelungen 140 können an ihren rückwärtigen Enden wahlweise um kürzere oder längere Winkelbereiche verlängert werden, indem erste und zweite Abschirmungen 144, 146 mit unterschiedlichen Abmessungen in Umfangsrichtung mittels eines manuell durch den Bediener aus der Kabine 16 oder selbsttätig abhängig von der Stellung der Klappe 80 kontrollierten Verstellantriebs an den rückwärtigen Enden der Teilummantelungen 140 positioniert werden, um die Erntegutreste mehr oder weniger weit nach außen abzulenken, indem sie die Wurfgebläse 100 abdecken und die freie Abgabe der Erntegutreste radial nach außen verhindern, so dass die Erntegutreste die Wurfgebläse 100 erst verlassen können, nachdem sie an den Abschirmungen 144 oder 146 vorbei gelangt sind. Dadurch kann im Schwadablagebetrieb durch Verbringen der ersten, längeren Abschirmung 144 an das rückwärtige, innere Ende der Teilummantelung 140 erreicht werden, dass das Kaff seitlich neben dem Schwad abgelegt wird, oder im Strohhäckselbetrieb werden die Erntegutreste gleichmäßig über das Feld verteilt, indem die zweiten, kürzere Abschirmung 146 an das rückwärtige, innere Ende der Teilummantelung 140 verbracht wird. Außerdem können die Abschirmungen 144, 146 beider Wurfgebläse 80 unabhängig voneinander verstellt werden, um Seitenwind- und/oder -hangeinflüsse auszugleichen.

Rückwärtig des rückwärtigen Teils 154 des Leitelements 150 ist eine Erntegutleitanordnung 164 vorgesehen, die zwei bewegliche Führungselemente 170 umfasst, die sich nach hinten an die seitlichen Wände des rückwärtigen Teils 154 des Leitelements 150 anschließen. Die Führungselemente 170 bilden zwei divergierende, jeweils nach außen und hinten gekrümmte Wände, die jeweils einem Wurfgebläse 100 benachbart angeordnet sind und sich an den Hüllkreis der Wurfgebläse 100 bzw. der Abschirmungen 114, 146 anschließen. Die beweglichen Führungselemente 170 sind jeweils um eine vorn liegende Drehachse 172, die sich parallel zur Drehachse 108 der Wurfgebläse 100 erstreckt, durch einen oberhalb des Deckels 132 angebrachten Antrieb in eine Schwingbewegung versetzbar, der nun anhand der Figuren 4 und 5 näher erläutert wird. Die Führungselemente 170 haben die Aufgabe, das im mittigen Bereich des Strohhäckslers 60 abgegebene Erntegut, das direkt durch den Freiraum 162 zwischen den die Wurfgebläse 100 teilweise umschließenden Teilummantelungen 134, 140 und dem Leitelement 150 hindurchtritt, und auch einen Teil des von den Wurfgebläsen 100 nach hinten abgegebenen Ernteguts in seitlicher Richtung zyklisch mehr oder weniger weit seitlich nach außen hin abzulenken und somit gleichmäßig auf dem Feld zu verteilen.

Die Figur 4 zeigt den Antrieb der Erntegutleiteinrichtung 164 in vergrößerter Darstellung von oben. Die Führungselemente 170 sind an ihren vorderen Enden um die Drehachsen 172 schwenkbar gelagert und dort auch jeweils mit einem gegabelten Schwenkarm 174 starr verbunden. Die Schwenkarme 174 erstrecken sich schräg nach vorn und innen und ihre endseitigen Gabeln überdecken sich. Beide Gabeln der beiden Schwenkarme 174 umschließen einen Stift 180, der sich parallel zu den Drehachsen 172 erstreckt und an einem Koppelarm 182 befestigt ist. Der Koppelarm 182 ist weiterhin an einem Schwenkpunkt 194 an einem Getriebe 184 mit verstellbarer Übersetzung angelenkt, das in der dargestellten Ausführungsform als Hebelgetriebe ausgeführt ist. Seitliche Führungen (nicht gezeigt) begrenzen den seitlichen Bewegungsbereich des Koppelarms 182 in der Nachbarschaft des Stifts 180. Das in der Figur 5 in einem vertikalen Schnitt gezeigte Getriebe 184 umfasst ein Hebelelement 186, das an einer Schwenkachse 188 oberhalb des Deckels 132 drehbar gelagert ist. Das Hebelelement 186 ist durch eine Kurbelstange 190 mit einem durch einen geeigneten, insbesondere hydraulischen oder elektrischen oder mechanischen Antrieb 195 um eine sich parallel zu den Drehachsen 172 erstreckende Achse in Drehung versetzbaren Antriebsrad 196 verbunden. Die Kurbelstange 190 ist exzentrisch am Antriebsrad 196 angelenkt. Das Antriebsrad 196 könnte auch durch einen geeigneten elektrischen oder hydraulischen Linearantrieb ersetzt werden. Das Übersetzungsverhältnis des Getriebes 184 ist dadurch veränderbar, dass die Position des Schwenkpunkts 194 des Koppelarms 182 am Hebelelement 186 durch einen Verstellantrieb 198 veränderbar ist, indem der Verstellantrieb 198 einen Schwenkstift 200, durch den der Koppelarm 182 am Hebelelement 186 angelenkt ist und der den Schwenkpunkt 194 definiert, entlang eines Langlochs 202 im Hebelelement 186 bewegt.

Der Verstellantrieb 198 ist in der dargestellten Ausführungsform als starr am Deckel 132 befestigter Hydraulikzylinder realisiert, dessen Kolbenstange durch ein Gelenk 204 mit einer Strebe 206 verbunden ist, die an ihrem anderen Ende eine Öffnung umfasst, durch welche sich der Schwenkstift 200 hindurch erstreckt. Anstelle eines Hydraulikzylinders könnte der Verstellantrieb 198 auch einen elektrisch betätigten Linearantrieb oder einen rotierenden Elektro- oder Hydraulikmotor umfassen, der die Strebe 206 bzw. den Schwenkstift 200 mittels eines Spindeltriebes entlang des Langlochs 202 verstellt. Anders als dargestellt kann der Verstellantrieb 198 auch mit dem Hebelelement 186 um die Schwenkachse 188 verschwenken, dann entfällt das Gelenk 204 und man hat den Vorteil, dass sich das Übersetzungsverhältnis nicht beim Schwenken des Hebelelements 186 kontinuierlich ändert.

Im Betrieb dreht sich das Antriebsrad 196 um die Achse 192 und versetzt das Hebelelement 186 über die Kurbelstange 190 in eine Hin- und Herbewegung, wie durch die Pfeile in den Figuren 3 und 4 veranschaulicht. Das Hebelelement 186 schwingt um die Schwenkachse 188 hin und her und überträgt diese Bewegung durch den Schwenkstift 200 auf den Koppelarm 182, der sie wiederum über den Stift 180 und die Gabeln der Schwenkarme 174 auf die Führungselemente 170 überträgt, welche somit kontinuierlich um die Drehachsen 172 hin- und her schwenken. Durch den Verstellantrieb 198 kann das Übersetzungsverhältnis des Getriebes 184 verändert werden: befindet sich der Schwenkstift 200 in der Nähe des der Kurbelstange 190 benachbarten Ende des Langlochs 202, bewegen sich die Führungselemente 170 mit maximaler Amplitude (das Übersetzungsverhältnis des Getriebes 184 beträgt dann nicht ganz eins). Befindet sich der Schwenkstift 200 hingegen am anderen Ende des Langlochs 202, sodass er koaxial mit der Schwenkachse 188 des Hebelelements 186 ausgerichtet ist, findet keine Bewegung des Koppelarms 182 mehr statt und die Führungselemente 170 stehen still; das Übersetzungsverhältnis des Getriebes 184 beträgt dann null. Dazwischen sind beliebig oder unendlich viele Zwischenstufen des Übersetzungsverhältnisses des Getriebes 184 möglich.

Bei einem Übersetzungsverhältnis von null wird der Koppelarm 182 in seine weitest möglich nach hinten verlagerte Stellung verbracht, was dadurch bedingt ist, dass sich die Schwenkachse 188 weiter hinten befindet als das Langloch 202 und somit die anderen, möglichen Stellungen des Schwenkstifts 202. Die Führungselemente 170 nehmen dann die in den Figuren 3 und 4 gestrichelt eingezeichnete, vorderste Stellung ein, in der sie sich weitest möglich nach vorn und nach außen erstrecken. In dieser Stellung legen sie die Erntegutreste, insbesondere das Kaff im Schwadablagemodus, seitlich neben dem Strohschwad ab, sodass letzteres nicht durch Kaff verunreinigt wird.

In der Kabine 16 ist eine Bedienereingabeeinrichtung 208 angebracht, mit welcher der Bediener auswählen kann, ob die Erntegutrestehäcksel- und -verteilanordnung im Schwadablagemodus oder im Häckselmodus betrieben werden soll. Eine mit der Bedienereingabeeinrichtung 208 verbundene, elektronische Steuerung 210 (vgl. Figur 1) verstellt dann über einen geeigneten Aktor die Klappe 80, wie oben beschrieben. Die Steuerung 210 veranlasst außerdem den Verstellantrieb 198, falls der Schwadablagemodus gewählt ist, die Übersetzung des Getriebes 184 auf null zu setzen, damit das Kaff seitlich neben dem Schwad abgelegt wird. Bei ausgewähltem Schwadablagemodus kann die Steuerung 210 auch den Antrieb des Antriebsrads 196 abschalten. Ist hingegen der Häckselbetrieb ausgewählt, veranlasst die Steuerung 210 den Verstellantrieb 198, die Übersetzung des Getriebes 184 auf einen von null verschiedenen, vorzugsweise durch den Bediener mit der Bedienereingabeeinrichtung 208 auswählbaren Wert zu verstellen und schaltet den Antrieb des Antriebsrads 196 ein.

## Patentansprüche

1. Erntegutrestehäcksel- und -verteilanordnung mit einem Strohhäcksler (60), wobei:
die Erntegutrestehäcksel- und -verteilanordnung in einem Schwadablagemodus, in dem Stroh am Strohhäcksler (60) vorbeigeleitet und als Schwad auf dem Feld abgelegt wird und in einem Häckselmodus betreibbar ist, in dem das Stroh durch den Strohhäcksler (60) geleitet und auf dem Feld verteilt wird,
und stromab des Strohhäckslers (60) Führungselemente (170) zum seitlichen Ablenken der Erntegutreste angeordnet sind, die durch einen Antrieb (195) in eine kontinuierliche Schwingbewegung versetzbar sind,
**dadurch gekennzeichnet, dass** zwischen dem Antrieb (195) und den Führungselementen (170) ein Getriebe (184) mit einem verstellbaren Übersetzungsverhältnis angeordnet ist, welches derart ausgebildet ist, dass es die Führungselemente (170) bei einem minimalen Übersetzungsverhältnis in eine die Erntegutreste weitestmöglich nach außen leitende Stellung verbringt.

2. Erntegutrestehäcksel- und -verteilanordnung nach Anspruch 1, wobei weiterhin zwei stromab des Strohhäckslers (60) seitlich nebeneinander angeordnete Wurfgebläsen (100) vorgesehen sind, die gegensinnig und mit ihren dem Strohhäcksler (60) zugewandten Bereichen aufeinander zu rotierend antreibbar sind und die Wurfgebläse (100) in beiden Modi mit Kaff aus einem Reinigungssystem (28) beaufschlagbar sind, und die Führungselemente (170) rückwärtig der Wurfgebläse (100) und zwischen ihnen jeweils dem Umfang eines der Wurfgebläse (100) benachbart angeordnet sind.

3. Erntegutrestehäcksel- und -verteilanordnung nach Anspruch 1 oder 2, wobei die Führungselemente (170) gegensinnig antreibbar sind.

4. Erntegutrestehäcksel- und -verteilanordnung nach einem der Ansprüche 1 bis 3, wobei die Führungselemente (170) an ihren vorderen Enden um zumindest näherungsweise vertikal orientierte Drehachsen (172) schwenkbar gelagert sind.

5. Erntegutrestehäcksel- und -verteilanordnung nach einem der vorhergehenden Ansprüche, wobei die Führungselemente (170) mit gegabelten Schwenkarmen (174) verbunden sind, wobei die Gabeln der Schwenkarme einen Stift (180) umgreifen, der an einem verschiebbaren Koppelarm (182) angebracht ist.

6. Erntegutrestehäcksel- und -verteilanordnung nach einem der Ansprüche 1 bis 5, wobei die Führungselemente (170) durch einen beweglichen Koppelarm (182) mit dem Getriebe (184) verbunden sind, das Getriebe (184) ein um eine Schwenkachse (188) schwenkbar gelagertes Hebelelement (186) umfasst, das mittels einer mit dem Antrieb (195) gekoppelten Kurbelstange (190) in eine Schwingbewegung versetzbar ist und der Koppelarm (182) gegenüber dem Hebelelement (186) schwenkbar gelagert und die Position des Schwenkpunkts (194) des Koppelarms (182) am Hebelelement (186) durch einen fremdkraftbetätigten Verstellantrieb (198) entlang des Hebelelements (186) verstellbar ist.

7. Erntegutrestehäcksel- und -verteilanordnung nach Anspruch 6, wobei der Schwenkpunkt (194) des Koppelarms (182) durch den Verstellantrieb (198) bis in eine zur Schwenkachse (188) des Hebelelements (186) koaxiale Position verbringbar ist.

8. Erntegutrestehäcksel- und -verteilanordnung nach Anspruch 7, wobei die Schwenkachse (188) des Hebelelements (186) näher an den Führungselementen (170) positioniert ist als die übrigen Stellungen des Koppelarms (182) am Hebelelement (186).

9. Erntegutrestehäcksel- und -verteilanordnung nach einem der vorhergehenden Ansprüche, wobei eine Steuerung (210) vorhanden ist, mit der die Erntegutrestehäcksel- und - verteilanordnung zwischen dem Häckselmodus und dem Schwadablagemodus umschaltbar ist und die selbsttätig das Getriebe (184) im Schwadablagemodus in die Stellung minimaler Übersetzung verbringt.

10. Mähdrescher (10) mit einer Erntegutrestehäcksel- und -verteilanordnung nach einem der Ansprüche 1 bis 9.

## Claims

1. Harvested goods remnant shredder and distribution assembly with a straw chopper (60), wherein:
the harvested goods remnant shredder and distribution assembly can be operated in a swath discharge mode, in which straw is guided past the straw chopper (60) and is deposited as swath on the field, and in a chopping mode, in which the straw is guided through the straw chopper (60) and is distributed over the field,
and guiding elements (170) for the lateral deflection of the harvested goods are arranged downstream of the straw chopper (60) and can be set into a continuous swinging movement by means of a drive (195),
**characterized in that** a transmission (184) with an adjustable transmission ratio is arranged between the drive (195) and the guiding elements (170), said transmission being designed in such a manner that it brings the guiding elements (170) at a minimal transmission ratio into a position guiding the harvested goods remnants outwards as far as possible.

2. Harvested goods remnant shredder and distribution assembly according to Claim 1, wherein, furthermore, two ejector blowers (100) which are arranged laterally next to each other downstream of the straw chopper (60) are provided, said ejector blowers being driveable so as to rotate in opposite directions and with the regions thereof which face the straw chopper (60) towards each other, and wherein the ejector blowers (100) can be charged in both modes with chaff from a cleaning system (28), and the guiding elements (170) are arranged at the rear of the ejector blowers (100) and in-between the latter in each case adjacent to the circumference of one of the ejector blowers (100).

3. Harvested goods remnant shredder and distribution assembly according to Claim 1 or 2, wherein the guiding elements (170) are driveable in opposite directions.

4. Harvested goods remnant shredder and distribution assembly according to one of Claims 1 to 3, wherein the guiding elements (170) are mounted at the front ends thereof so as to be pivotable about at least approximately vertically oriented axes of rotation (172).

5. Harvested goods remnant shredder and distribution assembly according to one of the preceding claims, wherein the guiding elements (170) are connected to forked pivot arms (174), wherein the forks of the pivot arms engage around a pin (180) which is attached to a displaceable coupling arm (182).

6. Harvested goods remnant shredder and distribution assembly according to one of Claims 1 to 5, wherein the guiding elements (170) are connected by a moveable coupling arm (182) to the transmission (184), the transmission (184) comprises a lever element (186) which is mounted pivotably about a pivot axis (188) and can be set into a swinging movement by means of a crank rod (190) coupled to the drive (195), and the coupling arm (182) is mounted pivotably in relation to the lever element (186), and the position of the pivot point (194) of the coupling arm (182) on the lever element (186) is adjustable along the lever element (186) by an adjustment drive (198) actuated by external force.

7. Harvested goods remnant shredder and distribution assembly according to Claim 6, wherein the pivot point (194) of the coupling arm (182) can be brought by the adjustment drive (198) into a position co-axial with respect to the pivot axis (188) of the lever element (186).

8. Harvested goods remnant shredder and distribution assembly according to Claim 7, wherein the pivot axis (188) of the lever element (186) is positioned closer to the guiding elements (170) than the remaining positions of the coupling arm (182) on the lever element (186).

9. Harvested goods remnant shredder and distribution assembly according to one of the preceding claims, wherein there is a controller (210) with which the harvested goods remnant shredder and distribution assembly can be switched over between the chopping mode and the swath discharge mode and which automatically brings the transmission (184) into the minimal transmission ratio position in the swath discharge mode.

10. Agricultural harvester (10) with a harvested goods remnant shredder and distribution assembly according to one of Claims 1 to 9.

## Revendications

1. Agencement de hachage et de répartition de résidus de produits de récolte avec un hacheur de paille (60), dans lequel
l'agencement de hachage et de répartition de résidus de récolte peut fonctionner dans un mode d'andainage, dans lequel de la paille est conduite le long du hacheur de paille (60) et déposée sur le champ sous forme d'andain et dans un mode de hachage, dans lequel la paille est conduite à travers le hacheur de paille (60) et répartie sur le champ,
et des éléments de guidage (170) pour la déviation des résidus de produits de récolte sont disposés en aval du hacheur de paille (60), et ils peuvent être animés d'un mouvement oscillant continu par un entraînement (195),
**caractérisé en ce qu'**une transmission (184) est disposée entre l'entraînement (195) et les éléments de guidage (170) avec un rapport de conversion réglable, laquelle est configurée de telle manière qu'elle amène les éléments de guidage (170) avec un rapport de conversion minimal dans une position conduisant les résidus de produits de récolte le plus loin possible vers l'extérieur.

2. Agencement de hachage et de répartition de résidus de produits de récolte selon la revendication 1, dans lequel il est en outre prévu deux souffleuses à éjection (100) disposées latéralement l'une à côté de l'autre en aval du hacheur de paille (60), qui peuvent être entraînées en sens contraire et avec leurs régions tournées vers le hacheur de paille (60) tournant l'une vers l'autre et les souffleuses à éjection (100) peuvent être alimentées dans les deux modes avec des déchets provenant d'un système de nettoyage (28), et les éléments de guidage (170) sont disposés à l'arrière des souffleuses à éjection (100) et sont disposés entre elles chaque fois à proximité du pourtour d'une des souffleuses à éjection (100).

3. Agencement de hachage et de répartition de résidus de produits de récolte selon la revendication 1 ou 2, dans lequel les éléments de guidage (170) peuvent être entraînés en sens contraire.

4. Agencement de hachage et de répartition de résidus de produits de récolte selon l'une quelconque des revendications 1 à 3, dans lequel les éléments de guidage (170) sont montés de façon pivotante à leurs extrémités avant autour d'axes de rotation (172) orientés au moins approximativement à la verticale.

5. Agencement de hachage et de répartition de résidus de produits de récolte selon l'une quelconque des revendications précédentes, dans lequel les éléments de guidage (170) sont reliés à des bras pivotants fourchus (174), dans lequel les fourches des bras pivotants entourent une tige (180), qui est montée sur un bras de couplage mobile (182).

6. Agencement de hachage et de répartition de résidus de produits de récolte selon l'une quelconque des revendications 1 à 5, dans lequel les éléments de guidage (170) sont reliés à la transmission (184) par un bras de couplage mobile (182), la transmission (184) comprend un élément de levier (186) monté de façon pivotante autour d'un axe de pivotement (188), qui peut être mis en mouvement oscillant au moyen d'une manivelle (190) couplée à l'entraînement (195) et le bras de couplage (182) est monté de façon pivotante par rapport à l'élément de levier (186) et la position du point de pivotement (194) du bras de couplage (182) sur l'élément de levier (186) peut être réglée le long de l'élément de levier (186) par un entraînement de réglage à commande extérieure (198).

7. Agencement de hachage et de répartition de résidus de produits de récolte selon la revendication 6, dans lequel le point de pivotement (194) du bras de couplage (182) peut être amené par l'entraînement de réglage (198) jusque dans une position coaxiale à l'axe de pivotement (188) de l'élément de levier (186).

8. Agencement de hachage et de répartition de résidus de produits de récolte selon la revendication 7, dans lequel l'axe de pivotement (188) de l'élément de levier (186) est positionné plus près des éléments de guidage (170) que les autres positions du bras de couplage (182) sur l'élément de levier (186).

9. Agencement de hachage et de répartition de résidus de produits de récolte selon l'une quelconque des revendications précédentes, dans lequel il se trouve une commande (210), avec laquelle l'agencement de hachage et de répartition de résidus de produits de récolte peut être commuté du mode de hachage au mode d'andainage et qui amène automatiquement la transmission (184) dans le mode d'andainage dans la position de conversion minimale.

10. Moissonneuse-batteuse (10) avec un agencement de hachage et de répartition de résidus de produits de récolte selon l'une quelconque des revendications 1 à 9.
